# EUROPÄISCHE PATENTSCHRIFT

(11) **EP 1 103 489 B1**
(45) Veröffentlichungstag und Bekanntmachung des Hinweises auf die Patenterteilung: **24.03.2004**
(21) Anmeldenummer: 00124696.6
(22) Anmeldetag: 11.11.2000
(51) Int. Cl.: B65D 81/30

(54) **Verpackung für Klebfolien**
Package for adhesive films
Emballage pour films adhésifs

(30) Priorität: 26.11.1999 DE 19956946
(43) Veröffentlichungstag der Anmeldung: 30.05.2001
(73) Patentinhaber: Tesa AG, 20253 Hamburg (DE)
(72) Erfinder: Junghans, Andreas, 22457 Hamburg (DE); Franck,Achim, 20259 Hamburg (DE); Lühmann, Bernd, Dr., 22844 Norderstedt (DE); Wieck, Andreas, 25449 Halstenbeck (DE); Krawinkel, Thorsten, Dr., 22457 Hamburg (DE)

(56) Entgegenhaltungen:
- DE-A- 19 720 145
- GB-A- 617 431
- GB-A- 2 010 699
- LU-A- 35 863

## Beschreibung

Die Erfindung betrifft eine Verpackung für Klebfolien, insbesondere für einseitig oder beidseitig haftklebrige, durch dehnendes Verstrecken in der Verklebungsebene rückstands- und zerstörungsfrei wiederablösbare Klebfolien bzw. Klebfolienstreifen.

Elastisch oder plastisch hochdehnbare (stripfähige) Selbstklebebänder, welche sich durch im wesentlichen in der Verklebungsebene dehnendes Verstrecken rückstands- und zerstörungsfrei wiederablösen lassen, sind aus US 4,024,312, DE 33 31 016, WO 92/11332, WO 92/11333, DE 42 22 849, WO 95/06691, DE 195 31 696, DE 196 26 870, DE 196 49 727, DE 196 49 728, DE 196 49 729, DE 197 08 366, DE 197 20 145, WO 99/31193 und WO 99/37729 bekannt.

Eingesetzt werden sie häufig in Form von ein- oder beidseitig haftklebrigen Klebfolienstreifen (Klebebandstreifen, Klebestreifen), welche bevorzugt einen nicht haftklebrigen Anfasserbereich aufweisen, von welchem aus der Ablöseprozeß eingeleitet wird. Besondere Anwendungen entsprechender Selbstklebebänder finden sich u. a. in DE 42 33 872, DE 195 11 288, US 5,507,464, US 5,672,402 und WO 94/21157. Spezielle Ausführungsformen sind z. B. in DE 44 28 587, DE 44 31 914, WO 97/07172, DE 196 27 400, WO 98/03601 und DE 196 49 636, DE 197 20 526, DE 197 23 177, DE 297 23 198, DE 197 26 375, DE 197 56 084 und DE 197 56 816 beschrieben.

Bevorzugte Einsatzgebiete vorgenannter Klebfolienstreifen beinhalten insbesondere die rückstands- und zerstörungsfrei wiederablösbare Fixierung leichter bis mittelschwerer Gegenstände im Wohn-, Arbeits- und Bürobereich. Sie ersetzen hierbei klassische Befestigungsmittel, wie z. B. Stecknadeln, Pin-Nadeln, Heftzwecken, Nägel, Schrauben, klassische Selbstklebebänder und Flüssigklebstoffe, um nur einige zu nennen. Wesentlich für den erfolgreichen Einsatz o. g. Klebfolienstreifen ist neben der Möglichkeit des rückstands- und zerstörungsfreien Wiederablösens verklebter Gegenstände deren einfache und schnelle Verklebung sowie für die vorgesehene Verklebungsdauer deren sicherer Halt.

Entsprechend obengenannter Patentschriften geeignete Haftklebemassen umfassen primär solche auf Basis von Naturkautschuk-Harz Gemischen, Synthesekautschuk-Harz Gemischen sowie Acrylatcopolymeren. In der praktischen Anwendung haben sich jedoch durchweg Haftklebemassen auf Basis von Styrolblockcopolymer-Harz Gemischen am Markt etabliert. So nutzen die Produkte Command® Adhesive der Minnesota Mining and Manufacturing Co. Inc., St. Paul (USA), tesa® Power-Strips®, tesa® Power-Strips® mini und tesa® Poster-Strips der Beiersdorf AG, Hamburg (D) und Plastofix® Formule Force 1000 der Fa. Plasto (F) sämtlichst eine Haftklebemasse auf Basis von Styrolblockcopolymer-Harz Gemischen.

Typisch für Haftklebemassen auf Basis von Styrolblockcopolymer-Harz Gemischen ist ihre im Vergleich zu z. B. Acrylatcopolymeren signifikant höhere Anfälligkeit für thermooxidative Schädigung, Ozonschädigung sowie Schädigung durch UV-Strahlung. Vorgenanntes gilt besonders für Haftklebemassen auf Basis von solchen Styrolblockcopolymeren, welche Elastomerketten mit ungesättigten Kohlenstoff-Kohlenstoff Bindungen enthalten, wie dies z. B. für polybutadienblockhaltige und polyisoprenblockhaltige Styrolblockcopolymere der Fall ist. Die Rezeptierung von Haftklebemassen auf Basis vorgenannter Styrolblockcopolymere berücksichtigt daher typischerweise Maßnahmen zu einer entsprechenden Stabilisierung derselben. So werden Styrolblockcopolymeren und Klebharzen bereits im Rahmen ihrer Herstellprozesse Antioxidantien und z. T. auch Lichtschutzmittel zugesetzt. Zur Erzeugung eines ausreichenden Alterungsschutzes für z. B. die Klebmassecompoundierung, weitere Verarbeitungsschritte, wie beispielsweise die Verarbeitung aus der Schmelze, Lagerzeiten sowie die Nutzungsdauer der die entsprechenden Haftklebemassen enthaltenden Produkte werden den Haftklebemassen bei ihrer Herstellung typischerweise zusätzlich oft mehrere Stabilisatoren, wie z. B. primäre Antioxidantien, sekundäre Antioxidantien, C-Radikalfänger, Metallfänger sowie unterschiedliche Arten von Lichtschutzmitteln zugemischt.

Eine hohe Alterungsstabilität ist für haftklebrige, durch dehnendes Verstrecken in der Verklebungsebene rückstands- und zerstörungsfrei wiederablösbare Klebfolienstreifen insbesondere in Bezug auf ihre vielfältigen Anwendungsbereiche essentiell. Bei der Rezeptierung ist es nötig, entsprechende Additive einzusetzen. Und auch die besondere Anfälligkeit eines aus der Klebfuge hervorstehenden Anfassers bei solchen Klebfolien ist erkannt.

So beschreibt die DE 42 22 849 z. B. einen "Streifen einer Klebfolie und seine Verwendung für eine wiederlösbare Verklebung" (DE 42 22 849 C1 - Titel), "wobei das eine Ende des Streifens beidseits mit einer UV-undurchlässigen Abdeckung versehen ist, die Zugleich als Anfasser zum Ziehen dient" (DE 42 22 849 C1 - Anspruch 1). Ziel des UV-undurchlässigen Anfassers ist die Vermeidung von Abrissen, wenn an dem Streifen zum Zwecke des Trennens gezogen wird (DE 42 22 849 C1 - S. 2, Z. 36, 37).

Dem Beipackzettel der tesa® Power-Strips®, tesa® Power-Strips® mini und tesa® Poster-Strips ist desweiteren zu entnehmen, daß diese für Verklebungen auf Fensterscheiben ungeeignet sind.

Es hat damit nicht an Vorschlägen gefehlt, wie denn derartige Klebfolien ausgerüstet werden sollen, um qualitativ gleichmäßig gute Produkte anbieten zu können. Und diese Vorschläge und ihre sich in den Handelsprodukten niederschlagenden Resultate sind auch unbestritten geeignet, diese Klebfolien gegenüber ihren ursprünglichen Produktvarianten zu verbessern. Gleichwohl aber gibt es immer wieder Fälle in der täglichen Praxis, bei denen offenbar unzulängliche Produkte eingesetzt werden, ohne daß erklärlich wäre, warum denn diese Produkte mangelhaft waren, etwa hinsichtlich Anfaßklebrigkeit, oder auch hinsichtlich reduzierter Kippscherstandzeit einer damit vorgenommen Verklebung, und auch die Schälfestigkeit einer damit vorgenommenen Verklebung kann schlechte Ergebnisse zeigen, ohne daraus einen Hinweis ableiten zu können, weswegen dies denn so sein mag.

Die GB 2 010 699 A betrifft eine Rückseitenbeschichtung für eine Klebefolie, und zwar eine Antihaftbeschichtung. In Anspruch 6 sind unter den Additiven, die der Antihaftbeschichtung zugesetzt sind, auch solche gegen ultraviolette Strahlen genannt. Diese Additive sollen offenbar dem Schutz der Wachs-Polyethylen-Antihaftschicht dienen. Ein Schutz der Haftklebemasse als solcher - und zwar ein vollständiger durch Abdeckungen und/oder Umverpackungen - wird in keiner Weise nahegelegt. Ebenso findet keine Verpackung eine Erwähnung.

Aufgabe der vorliegenden Erfindung war es, hier Abhilfe zu schaffen, insbesondere dem Verbraucher ein qualitativ stets gleichmäßig hochwertiges Produkt in Form einer Klebfolie anbieten zu können, ohne bei ihrer Verwendung enttäuscht zu werden hinsichtlich der Leistungsfähigkeit einer damit vorgenommenen Verklebung und ihrer späteren Auflösung.

Gelöst wird diese Aufgabe durch eine Verpackung für derartige Klebfolien, wie sie in den Ansprüchen näher gekennzeichnet ist.

Es zeigte sich nämlich, daß der Verpackung solcher Klebfolien bisher nicht die ihr angemessene Aufmerksamkeit gewidmet wurde, sowohl in der Patentliteratur als auch in der Praxis der diversen im Handel erhältlichen Produkte. Denn mit üblichen Trennpapieren eingedeckte Klebfolien der hier genannten Art stellen sich eben als unzulänglich verpackt heraus, und auch die üblichen Blisterverpackungen stellen sich als unzulänglich heraus, wegen ihrer mangelhaften UV-Undurchlässigkeit.

So zeigte sich, daß vorgenannte handelsübliche Selbstklebeprodukte, obwohl sie z. T. von vergleichsweise dicken Trennpapieren abgedeckt sind, bezüglich ihrer Verklebungsleistung signifikante Qualitätseinbußen erfahren, wenn sie vor ihrer Nutzung einer UV-Bestrahlung ausgesetzt werden, wie sie auch in einer häuslichen Wohnumgebung oder in einer Verkaufsumgebung leicht auftreten kann, ohne daß die Klebestreifen notwendigerweise direkter Sonnenbestrahlung ausgesetzt sind. So beobachtet man überraschenderweise z. B. für der Originalverkaufspackung entnommene tesa® Power-Strips®, welche normalem Raumlicht, erzeugt durch Leuchtstoffröhren, ausgesetzt werden, innerhalb weniger Wochen einen deutlichen Abfall der Verklebungsleistung, dies obwohl die aus der Originalverkaufspackung entfernten Power-Strips® beidseitig eine weitestgehend undurchsichtige Trennpapiereindeckung besitzen und zusätzlich einzeln in weitestgehend undurchsichtige Papiertaschen eingesiegelt sind. Entsprechend drastischer fallen die Ergebnisse nach stärkerer UV-Exposition, z. B. nach direkter Sonnenbestrahlung, aus. Ein entsprechender Abfall der Verklebungsleistung tritt bei im Dunkeln gelagerter Ware dagegen auch nach sehr langen Lagerzeiten und erhöhten Lagertemperaturen (z. B. 1 Jahr bei +40°C) nicht in Erscheinung. Untersucht man nun ausgewählte Volumeneigenschaften derart unterschiedlich gelagerter tesa® Power-Strips®, z. B. ihre Reißfestigkeit oder ihre max. Dehnung im Vgl. zu im Dunkeln gelagerter Ware, so sind innerhalb der Meßgenauigkeit keine Unterschiede zu detektieren. Die die Verklebungsfestigkeit beeinflussenden Effekte betreffen folglich vornehmlich die Oberfläche der Haftklebestreifen.

Können für industrielle Anwendungen von Selbstklebebändern Verarbeitungs- und Lagerbedingungen sowie die einzusetzenden Haftgründe ggf. spezifiziert werden, so gilt dies für die private Nutzung von Selbstklebebändern oder die Verwendung in einer Büro- oder heimischen Arbeitsumgebung typischerweise gerade nicht. In entsprechenden Bereichen erfolgreich einzusetzende Klebebänder müssen durchweg auf einer Vielzahl von Untergründen, unter unterschiedlichsten klimatischen Bedingungen, vielfältigster Lichteinwirkung und vielfältigster Handhabung sicher nutzbar sein. Solches bedingt entsprechend hohe Ansprüche an die Alterungsstabilität entsprechender Klebestreifen.

Eine vergleichende Untersuchung von tesa® Power-Strips®, tesa® Power-Strips® mini, tesa® Poster-Strips, Command® Adhesive Klebestreifen und Plastofix® Formule Force 1000 Klebestreifen (Haftklebemassen der genannten Klebestreifen basieren sämtlichst auf Styrolblockcopolymer-Harz Gemischen) zeigt, daß sämtliche der vorgenannten Klebestreifen eine signifikante Verschlechterung ihrer Verklebungsleistung nach UV-Exposition aufweisen, dies bis hin zum völligen Verlust jeglicher Haftklebrigkeit. Prüfungen wurden sowohl für die Original-Klebestreifen durchgeführt, welche mit den vom jeweiligen Hersteller applizierten Abdeckmaterialien (Trennpapieren bzw. Trennfolien) ausgestattet waren als auch für die zusätzlich mit ihren Original Siegelpapierhüllen ausgerüsteten tesa® Power-Strips® als auch im Falle der Command® Adhesive Klebestreifen und der Plastofix® Formule Force 1000 Klebestreifen, für die in ihren Originalverpackungen (Pappkarte ausgerüstet mit transparenter Folienblisterhaube) befindlichen Klebestreifen.

Es zeigt sich somit, daß die bislang im Markt befindlichen durch dehnendes Verstrecken in der Verklebungsebene rückstands- und zerstörungsfrei wiederablösbaren Klebfolien über keinen ausreichenden Schutz verfügen, der sie dazu befähigt, auch unter in Wohn-, Arbeits- und Büroumgebung etc. üblicherweise auftretenden UV-Expositionen ihre ursprüngliche Verklebungsleistung dauerhaft beizubehalten. Dies gilt sowohl bezüglich der aktuell verwendeten Abdeckpapiere bzw. Abdeckfolien, der z. T. verwendeten Siegelhüllen sowie ebenfalls der verwendeten transparenten Verpackungsmaterialien.

Möglichkeiten zu Produkten mit verbesserter UV-Stabilität zu gelangen beinhalten die Nutzung weitestgehend hydrierter und damit chemisch beständigerer Ausgangsmaterialien, wie sie z. B. hydrierte Styrolblockcopolymere in Abmischung mit hydrierten Kohlenwasserstoffharzen bieten. Mit einem solchen Vorgehen sind allerdings mehrere Nachteile verbunden. Zum ersten wird hierdurch die zur Verfügung stehende Anzahl möglicher Rezepturbestandteile für die Klebmasseformulierung drastisch reduziert. Desweiteren lassen sich bei Verwendung gesättigter Styrolblockcopolymere im Vergleich zu ungesättigten Blockcopolymeren typischerweise nicht entsprechend leistungsfähige Haftklebemassen realisieren. Tatsächlich weisen aber insbesondere hydrierte Klebharze infolge der in ihnen durchweg vorhandenen tertiären Kohlenstoff-Atome prinzipiell die selben Defizite auf, wie ungesättigte Harze, wenn auch auf einem günstigeren Niveau. Obgleich üblicherweise weniger stark ausgeprägt, so können auch sie bei Exposition durch UV-Strahlung geschädigt werden. Als weiterer gravierender Nachteil sind die vergleichsweise sehr viel höheren Kosten für hydrierte Ausgangsmaterialien zu nennen.

Häufig sind zur attraktiveren Ausgestaltung der Produktdarreichung, oder aus Gründen der Sichtbarkeit des Verpackungsgutes, transparente Verpackungsmaterialien erwünscht. Beispiele für entsprechende Verpackungen beinhalten Pappschachteln mit transparenten Sichtfenstern, Blisterverpackungen und Schlauchbeutelverpackungen. Entsprechendes gilt, wenn die Klebfolienstreifen mit transparenten Abdeckmaterialien ausgerüstet sein sollen. Auch hier bietet die vorliegende Erfindung gangbare Wege zum Erfolg durch entsprechende Verpackungen.

Durch Verwendung von speziellen, insbesondere flächigen Abdeckmaterialien, welche den Zutritt von UV-Strahlung der schädigenden Wellenlängenbereiche zur Klebmasseoberfläche bis zum Zeitpunkt der Verklebung effektiv unterdrücken, lassen sich wesentliche Verbesserungen der Produktqualität erzielen, die für die Praxis von großer Bedeutung sind. Insbesondere geeignet ist der Einsatz von trennlackierten, insbesondere mit Silikontrennlacken ausgerüsteten Papieren bzw. trennlackierten, insbesondere mit Silikontrennlacken ausgerüsteten Kunststoffolien, welche in direktem Kontakt mit den zu schützenden Haftklebemasseoberflächen stehen. Erfindungsgemäß geeignet sind Abdeckmaterialien, welche Transmissionen für elektromagnetische Strahlung aufweisen, die im Wellenlängenbereich zwischen 240 nm und 280 nm bei < 2%, bevorzugt bei < 1%, im Wellenlängenbereich zwischen 280 nm und 320 nm bei < 2%, bevorzugt bei < 1%, im Wellenlängenbereich zwischen 320 nm und 360 nm bei < 5%, bevorzugt bei < 2%, besonders bevorzugt bei < 1 % und im Wellenlängenbereich zwischen 360 nm und 420 nm bei < ca. 80%, bevorzugt bei < 20%, besonders bevorzugt bei < 2% liegt. Bevorzugt steigt die Transmission mit steigender Wellenlänge der elektromagnetischen Strahlung an. Um bei transparenten Trennfolien eine hohe Extinktion auch im Bereich langer Wellenlängen zwischen 360 nm und 420 nm zu erhalten, werden vorteilhafterweise transparente, farbige Trennmaterialien genutzt.

Zusätzlich oder alternativ können erfindungsgemäß Umverpackungen, speziell Siegelpapiere oder Siegelfolien für die Einsiegelung der Klebestreifen verwendet werden, um den Zutritt von UV-Strahlung der schädigenden Wellenlängenbereiche zur Klebmasseoberfläche bis zum Zeitpunkt der Verklebung effektiv zu unterdrücken. Erfindungsgemäß geeignet sind Umverpackungsmaterialien, welche Transmissionen für elektromagnetische Strahlung aufweisen, die im Wellenlängenbereich zwischen 240 nm und 280 nm bei < 2%, bevorzugt bei < 1%, im Wellenlängenbereich zwischen 280 nm und 320 nm bei < 2%, bevorzugt bei < 1%, im Wellenlängenbereich zwischen 320 nm und 360 nm bei < 5%, bevorzugt bei < 2%, besonders bevorzugt bei < 1 % und im Wellenlängenbereich zwischen 360 nm und 420 nm bei < ca. 80%, bevorzugt bei < 20%, besonders bevorzugt bei < 2% liegen. Bevorzugt steigt die Transmission mit steigender Wellenlänge der elektromagnetischen Strahlung an. Um bei transparenten Umverpackungsmaterialien (z. B. transparente Siegelfolien) eine hohe Extinktion auch im Bereich langer Wellenlängen zwischen 360 nm und 420 nm zu erhalten, werden vorteilhafterweise transparente, farbige Folien genutzt.

Alternativ können erfindungsgemäß Kombinationen von flächigen Abdeckmaterialien und Umverpackungsmaterialien (z. B. Siegelpapiere oder Siegelfolien) eingesetzt werden. Entsprechende Kombinationen weisen Transmissionen auf, welche im Wellenlängenbereich zwischen 240 nm und 280 nm bei < 2%, bevorzugt bei < 1 %, im Wellenlängenbereich zwischen 280 nm und 320 nm bei < 2%, bevorzugt bei < 1%, im Wellenlängenbereich zwischen 320 nm und 360 nm bei < 5%, bevorzugt bei < 2%, besonders bevorzugt bei < 1 % und im Wellenlängenbereich zwischen 360 nm und 420 nm bei < ca. 80%, bevorzugt bei < 20%, besonders bevorzugt bei < 2% liegen. Bevorzugt steigt die Transmission mit steigender Wellenlänge der elektromagnetischen Strahlung an. Um bei transparenten Abdeckfolien und/oder transparenten Umverpackungsmaterialien (z. B. transparente Siegelfolien) eine hohe Extinktion auch im Bereich langer Wellenlängen zwischen 360 nm und 420 nm zu erhalten, werden vorteilhafterweise transparente, farbige Folien genutzt.

Zusätzlich oder alternativ können im sichtbaren Wellenlängenbereich optisch transparente Verpackungsmaterialien (z. B. Kunststoffblisterfolien, Sichtfenster in Pappschachteln, Schlauchbeutelfolien, etc.) derart ausgestaltet sein, daß sie den Zutritt von UV-Strahlung auf die endverpackten (z. B in Einzelverpackungen endverpackten) Klebestreifen effektiv unterdrücken. Erfindungsgemäß geeignet sind optisch transparente Verpackungsmaterialien, welche Transmissionen für elektromagnetische Strahlung aufweisen, die im Wellenlängenbereich zwischen 240 nm und 280 nm bei < 2%, bevorzugt bei < 1%, im Wellenlängenbereich zwischen 280 nm und 320 nm bei < 2%, bevorzugt bei < 1 %, im Wellenlängenbereich zwischen 320 nm und 360 nm bei < 5%, bevorzugt bei < 2%, besonders bevorzugt bei < 1 % und im Wellenlängenbereich zwischen 360 nm und 420 nm bei < ca. 80%, bevorzugt bei < 20%, besonders bevorzugt bei < 2% liegen. Bevorzugt steigt die Transmission mit steigender Wellenlänge der elektromagnetischen Strahlung an. Um bei transparenten Verpackungen eine hohe Extinktion auch im Bereich langer Wellenlängen zwischen 360 nm und 420 nm zu erhalten, werden vorteilhafterweise transparente, farbige Verpackungsmaterialien genutzt.

Durch Einsatz vorgenannter Abdeckmaterialien und/oder Umverpackungsmaterialien (z. B. Siegelfolien oder Siegelpapiere) und/oder Endverpackungsmaterialien lassen sich durch dehnendes Verstrecken rückstands- und zerstörungsfrei wiederablösbare Selbstklebestreifen realisieren, welche einen weitestgehenden Erhalt ihrer Verklebungsleistung auch nach UV-Exposition aufweisen und damit einen signifikanten Vorteil in der praktischen Handhabung besitzen.

### Detailbeschreibung

### Produktaufbau

### Klebefolien

Erfindungsgemäß gegen UV-Degradation zu schützende Klebefolien beinhalten insbesondere solche entsprechend US 4,024,312, DE 33 31 016, WO 92/11333, DE 42 22 849, WO 95/06691, DE 196 26 870, DE 196 49 727, DE 196 49 728, DE 196 49 729 und DE 197 08 366, welche Haftklebemassen auf Basis von Elastomer-Harz Gemischen nutzen. Insbesondere nutzen erfindungsgemäß gegen UV-Degradation zu schützende Klebefolien Haftklebemassen auf Basis von polymeren Dienen, wie z. B. Naturkautschuk, synthetischem Polyisopren und Polybutadien. Desweiteren nutzen erfindungsgemäß gegen UV-Degradation zu schützende Klebefolien Haftklebemassen auf Basis von Styrolblockcopolymeren. Bevorzugte Styrolblockcopolymere beinhalten solche mit Elastomerblöcken auf Basis von 1,3-Dienen, wie z. B. Polyisopren, Polybutadien, Isopren-Butadien Copolymeren sowie den zu vorgenannten Systemen korrespondierenden partiell oder vollständig hydrierten Analoga. Desweiteren nutzen erfindungsgemäß gegen UV-Degradation zu schützende Klebefolien Haftklebemassen auf Basis statistischer Copolymere konjugierter Diene und weiterer polymerisierbarer Verbindungen, wie z. B. Styrol-Butadien Copolymere oder säurefunktionalisierten Styrol-Butadien Copolymere, um nur einige zu nennen. Desweiteren nutzen erfindungsgemäß gegen UV-Degradation zu schützende Klebefolien Haftklebemassen auf Basis von polyolefinischen Elastomeren. Erfindungsgemäß einsetzbar sind desweiteren Klebefolien mit Haftklebemassen auf Basis von Gemischen vorgenannter Elastomere sowie auf Basis von Abmischungen vorgenannter Elastomere mit weiteren Polymeren.

### Abdeckungen geringer UV-Transmission

Geeignete flächige Abdeckmaterialien, welche den Zutritt von UV-Strahlung der schädigenden Wellenlängenbereiche zur Klebmasseoberfläche bis zum Zeitpunkt der Verklebung effektiv unterdrücken, weisen Transmissionen für elektromagnetische Strahlung auf, die im Wellenlängenbereich zwischen 240 nm und 280 nm bei < 2%, bevorzugt bei < 1 %, im Wellenlängenbereich zwischen 280 nm und 320 nm bei < 2%, bevorzugt bei < 1 %, im Wellenlängenbereich zwischen 320 nm und 360 nm bei < 5%, bevorzugt bei < 2%, besonders bevorzugt bei < 1 % und im Wellenlängenbereich zwischen 360 nm und 420 nm bei < ca. 80%, bevorzugt bei < 20%, besonders bevorzugt bei < 2% liegen. Bevorzugt steigt die Transmission mit steigender Wellenlänge der elektromagnetischen Strahlung an. Um eine niedrige Transmission auch im Bereich langer Wellenlängen zwischen 360 nm und 420 nm zu erhalten, werden vorteilhafterweise farbige, insbesondere schwarz pigmentierte oder eingefärbte Materialien eingesetzt.

Erfindungsgemäß bevorzugt eingesetzt werden Abdeckmaterialien auf Papier- oder Kunststoffolienbasis. Abdeckmaterialien sind insbesondere klebmasseseitig trennlackiert. Bevorzugt eingesetzt werden mit silikonhaltigen Trennlacken beschichtete Papiere und Kunststoffolien.

Im Falle der Nutzung von Abdeckmaterialien auf Papierbasis können je nach Anforderung stark kalandrierte Papiere mit hoher Dichte, ein oder beidseitig geglättete Papiere, ein oder beidseitig mineralisch gestrichene Papiere oder ein oder beidseitig kunststoffbeschichtete Papiere erfindungsgemäß verwendet werden. Typische Flächengewichte der Papiere liegen zwischen 40 g/m² und 160 g/m², bevorzugt zwischen 60 und 140 g/m², besonders bevorzugt zwischen 75 g/m² und 125 g/m². Mit zunehmender Verdichtung und abnehmender Papierfaserlänge steigt die Transparenz der Papiere typischerweise an. Für eine verringerte UV- Durchlässigkeit eignen sich damit insbesondere geringer verdichtete dickere Papiere. Bevorzugt führen auch ein oder beidseitig auf das Papier aufgebrachte mineralische Beschichtungen zu einer erheblichen Reduzierung der UV-Durchlässigkeit. Desweiteren erfindungsgemäß bevorzugt eingesetzt werden farbige Papiere oder Papiere, welche durch geeignete Einfärbung mit mineralischen und/oder organischen Pigmenten oder mittels Impregnierung in ihrer Licht- und UV-Durchlässigkeit reduziert sind.

Papiere können durch eine zusätzliche Beschichtung, z. B. in Form einer Bedrukkung, weitestgehend UV-undurchlässig ausgestaltet sein. Beschichtungen können aus Lösung, Dispersion oder als 100 %-System verarbeitet werden. Möglichkeiten beinhalten u. a. die ein- oder beidseitige Ausrüstung mittels UV-absorbierender, UV-streuender oder UV-reflektierender Beschichtungen. Nutzbar sind u. a. Beschichtungen, welche UV-Absorber, wie z. B. Farbstoffe, organische und/oder anorganische Farbpigmente (farbig, weiß, schwarz), anorganische und/oder organische UV-Absorber, wie z. B. TiO₂, Abkömmlinge des Benzophenons, Hydroxy-Benztriazolderivate, Triazinabkömmlinge oder Gemische vorgenannter Materialien enthalten. Weiterhin erfindungsgemäß einsetzbar sind UV-reflektierende Metall- oder Metalloxidbeschichtungen, welche z. B. durch Bedampfen, Besputtern oder Transfer durch Heißprägung erhalten werden. - Beschichtungen können ein oder beidseitig auf den Papierträger aufgebracht sein. Bei beidseitiger Beschichtung können sie von gleicher oder von unterschiedlicher Art oder Beschichtungsstärke sein. Aus produktionstechnischen Gründen werden symmetrische Produktaufbauten in vielen Fällen bevorzugt, u. a. um eine gleichmäßige Feuchtigkeitsaufnahme bzw. Abgabe der Papiere während der Verarbeitung und im applizierten Zustand zu gewährleisten. - Trennpapiere sind zur Klebmasseseite mit einem abhäsiven Decklack versehen. Bevorzugt eingesetzt werden mit silikonhaltigen Trennlacken beschichtete Papiere. Optional können erfindungsgemäß nutzbare Papiere eine Bedruckung mit Schriftzügen, Symbolen etc. tragen.

Weitestgehend UV-undurchlässige Kunststoffolienabdeckungen können durch Zugabe UV-absorbierender, UV-streuender oder UV-reflektierender Additive zur Folienmatrix bzw. im Falle mehrschichtiger Folien zu einer oder mehrerer der sie aufbauenden Einzelschichten weitestgehend UV-undurchlässig ausgerüstet sein. Eine weitere Möglichkeit der weitestgehend UV-undurchlässigen Ausgestaltung ist die Veredelung der Folien mittels UV-absorbierender, UV-streuender oder UV-reflektierender Beschichtungen. Erfindungsgemäß einsetzbar sind u. a. ein- oder mehrschichtige Folien auf Basis von Polyolefinen, Polyestern, Polyamiden, Polyesteramiden, Polycarbonaten, Polyacrylaten sowie PVC um nur einige zu nennen. Bevorzugt eingesetzt werden Folien, welche durch ihre chemische Konstitution bereits eine signifikante UV-Absorption aufweisen, wie z. B. solche auf Basis aromatischer Polyester. Geeignete Folien können unverstreckt, uniaxial verstreckt oder biaxial verstreckt sein. Besonders bevorzugt werden biaxial verstreckte Folien auf Basis aromatischer Polyester. ― UV-absorbierende Additive, welche der Folie selbst und/oder einer ein- oder beidseitigen Beschichtung zugegeben sein können umfassen u. a. UV-Absorber, wie z. B. Abkömmlinge des Benzophenons, Hydroxy-Benztriazolderivate und Triazinabkömmlinge. Weiterhin geeignet ist die Zugabe von Farbstoffen oder Farbpigmenten. Sind speziell farblose transparente Folienabdeckungen gefordert, so ist der Zusatz transparenter, UV-absorbierender anorganischer oder organischer Materialien kolloidaler Größenordnung, wie z. B. transparentem TiO_{2,} oder die Zugabe zuvor gelisteter UV-Absorber zu bevorzugen. Vorgenannte Möglichkeiten können allein oder in Kombination genutzt werden.

Beschichtungen können ein oder beidseitig auf den Folienträger aufgebracht sein. Bei beidseitiger Beschichtung können die Beschichtungen von gleicher oder von unterschiedlicher Art oder Beschichtungsstärke sein. Folien sind zur Klebmasseseite mit einem abhäsiven Decklack versehen. Bevorzugt eingesetzt werden mit silikonhaltigen Trennlacken beschichtete Folien. Optional können erfindungsgemäß nutzbare Folien eine Bedruckung mit Schriftzügen, Symbolen etc. tragen.

### Umverpackungen

Weitestgehend UV-undurchlässige Umverpackungen, z. B. realisiert durch Einsiegelung der Klebestreifen mittels Siegelfolien oder Siegelpapieren oder durch Verpackung der Klebefolien mittels dünner Metallfolien (z.B. Aluminiumfolien) bieten im Vgl. zum alleinigen Einsatz von die UV-Transmission reduzierenden Trennpapieren und Trennfolien den Vorteil eines kompletten UV-Schutzes, da in diesem Fall auch die Randbereiche der Klebestreifen vollständig geschützt sind. Erfindungsgemäß genutzt werden bevorzugt Siegelpapiere und auch Siegelfolien. Die weitestgehende UV-Undurchlässigkeit vorgenannter Materialien kann dabei auf gleiche Weise erhalten werden, wie zuvor bei Abdeckungen geringer UV-Transmission beschrieben.

### UV-undurchlässige transparente Verpackungsfolien

Weitestgehend UV-undurchlässige transparente Verpackungsfolien für den Einsatz in Endverpackungen (z. B. in Einzelverpackungen) sind insbesondere dann zu bevorzugen, wenn einerseits die Möglichkeit der Ansicht des verpackten Gutes gegeben sein soll, andererseits ein effektiver UV-Schutz für das Verpackungsgut gefordert ist. Geeignete Materialien beinhalten Folien für z. B. Sichtfenster in Pappschachteln, Blisterfolien oder Schlauchbeutelfolien, welche analog den oben beschriebenen UV-undurchlässigen transparenten Abdeckfolien aufgebaut bzw. ausgerüstet sind.

### Kombinationen vorgenannter Möglichkeiten

Vorgenannte Möglichkeiten des UV-Schutzes der hier betrachteten Selbstklebebänder können allein oder in Kombination verwendet werden.

### Prüfmethoden

### UV-Exposition (Atlas Suntester)

Als UV-Quelle dient ein "Atlas Suntest CPS+" ausgerüstet mit einer Xenonröhre. Für sämtliche Versuche wird eine Bestrahlungsstärke von 500 W/m² eingestellt. Der Abstand zwischen Klebestreifen und Strahlungsquelle beträgt 15 cm. Lagerzeiten im Suntester liegen zwischen 1 und 8 Tagen. Die Temperatur beträgt während der Bestrahlung konstant 20 ± 2°C. Muster sind innerhalb von 24 h nach UV-Exposition zu beurteilen.

### Raumlichtlagerung (Leuchtstoffröhre)

Zur Simulation einer typischen im Wohn-, Büro- und Arbeitsbereich auftretenden UV-Belastung werden die zu prüfenden Haftklebestreifen einer Bestrahlung durch Leuchtstoffröhren (Philips Warmton 830; 58 Watt) ausgesetzt. Haftklebestreifen lagern während der Exposition in ca. 2 m Entfernung von 3 parallel angeordneten Leuchtstoffröhren vorgenannten Typs. Die tägliche Bestrahlungsdauer beträgt etwa 11 h. Die Umgebungstemperatur wurde zu 25 ± 3°C gemessen.

### Schälfestigkeit

Zur Ermittlung der Schälfestigkeit werden die zu untersuchenden Haftklebestreifenmuster einseitig vollflächig mit einer 23 µm starke PETP-Folie (Hostaphan RN 25; Mitsubishi Chemicals) luftblasenfrei einkaschiert, danach die zweite Klebfolienstreifenseite an einem Ende mit einem ca. 6 mm langen Folienstreifen (ebenfalls Hostaphan RN 25) abgedeckt, so daß an diesem Ende ein beidseitig nicht haftklebriger Anfasserbereich entsteht. Hiernach wird der zu prüfende Klebfolienstreifen vorderseitig, mit leichtem Fingerandruck auf den Prüfuntergrund (gestrichene Rauhfasertapete: Tapete = Erfurt Körnung 52, Farbe = Herbol Zenit LG, Tapete verklebt auf Preßspanplatte) aufgeklebt. Muster werden anschließend 10 s lang bei einem Anpreßdruck von 90 N pro 10 cm² Klebefläche angedrückt, danach 15 Minuten bei 40° C konditioniert. Die Prüfplatten werden anschließend horizontal fixiert, so daß der anfaßbare Bereich der Klebestreifen nach unten gerichtet ist. An den nicht klebenden Bereich wird mit Hilfe einer Klemme (Masse: 20 g entsprechend Schälkraft von 0.2 N) ein Gewicht (Masse: 50 g entsprechend zusätzlicher Schälkraft von 0.5 N) befestigt, so daß die entstehende Schälbelastung von 0.7 N orthogonal zur Verklebungsfläche wirkt. Nach 15 Minuten und nach 24 h wird diejenige Strecke markiert, die der Klebestreifen vom Verklebungsuntergrund seit Versuchsbeginn abgeschält ist. Der Abstand zwischen beiden Markierungen wird als Schälweg (Einheit: mm pro 24 h) angegeben.

### Anfaßklebrigkeit (Fingertack)

Die Bestimmung des Fingertacks erfolgt sensorisch. Ermittelt wird qualitativ der Verlust an Fingertack gegenüber dem Ausgangsmaterial.

### Anfaßklebrigkeit (Stempeltack)

Zur Bestimmung des Stempeltacks werden die zu prüfenden Klebestreifenmuster auf eine Größe von ca. 20 mm x 20 mm geschnitten und auf dem ebenso großen Probenteller des Meßgerätes befestigt. Von jedem der Muster werden zwölf Meßwerte an unterschiedlichen Stellen der 20 mm x 20 mm großen Klebestreifenoberfläche ermittelt. Hierzu wird eine hochglanzpolierte halbkugelförmige Stahlkugel vom Durchmesser d = 5 mm mit einer Geschwindigkeit von 1130 mm/min vertikal auf die Probenoberfläche abgesenkt und nach einer Kontaktzeit von 6 ms und einer Andruckkraft von 0.32 N mit ebenfalls 1130 mm/min von der Haftklebemasseoberfläche vertikal wieder abgelöst. Erfaßt wird die maximal auftretende Kraft beim Ablöseprozeß. Zwischen Fingertack und Stempeltack existiert näherungsweise nachfolgende Korrelation:

| **F max [mN)** | **Fingertack** |
|---|---|
| 500 | sehr niedrig (--) |
| 1000 - 3000 | niedrig (-) |
| 3000 - 6000 | mittel (0) |
| 6000 - 8000 | hoch (+) |
| > 8000 | sehr hoch (++) |

### Kippscherfestigkeit (Kippscherstandzeiten)

Zur Bestimmung der Kippscherfestigkeit wird die zu prüfende Klebstoff-Folie der Abmessung 20 mm x 50 mm, welche an einem Ende beidseitig mit einem 13 mm langen nicht haftklebrigen Anfasserbereich versehen ist (erhalten durch Aufkaschieren von 25 µm starker biaxial verstreckter Polyesterfolie der Abmessungen 20 mm x 13 mm (Hostaphan RN 25)), mit ihrem haftklebrigen Bereich mittig auf eine hochglanzpolierte quadratische Stahlplatte der Abmessung 40 mm x 40 mm x 3 mm (Länge x Breite x Dicke) verklebt. Die Stahlplatte ist rückseitig mittig mit einem 10 cm langen Stahlstift versehen, welcher vertikal auf der Plattenfläche sitzt. Die erhaltenen Probekörper werden mit einer Kraft von 100 N auf den zu prüfenden Haftgrund verklebt (Andruckzeit = 5 sec) und 5 min im unbelasteten Zustand belassen. Nach Beaufschlagung der gewählten Kippscherbelastung durch Anhängen eines Gewichtes (20 N bei 50 mm Hebelarm, wenn nicht anders angegeben) wird die Zeit bis zum Versagen der Verklebung (= Kippscherstandzeit) ermittelt.

### Höchstzugkraft // maximale Dehnung

Messungen erfolgen, wenn nicht anders vermerkt, in Anlehnung an DIN 53504 mit Normprüfkörpern der Größe S2 bei einer Separationsgeschwindigkeit von 300 mm/min.

### Messung der elektromagnetischen Transmission

Die elektromagnetische Transmission der zu untersuchenden Papiere und Folien erfolgte an einem UV-Spektrometer mit Ulbricht'scher Kugel (UVIKON 860; Kontron). Die genutzte Meßanordnung ermöglicht die Erfassung der gesamten elektromagnetischen Transmission inklusive der am zu vermessenden Medium gestreuten Strahlung. Ermittelt wurde die elektromagnetische Transmission im Wellenlängenbereich von 280 nm bis 420 nm sowie z. T. im Wellenlängenbereich von 240 nm bis 420 nm.

### Beispiele

### Beispiel I

Unterschiedliche marktgängige Klebebänder, welche sich durch dehnendes Verstrecken in der Verklebungsebene rückstands- und zerstörungsfrei wiederablösen lassen, - tesa® Power-Strips®, tesa® Poster-Strips, 3M Command® Adhesive Klebestreifen und Plastofix® Formule Force 1000 Klebestreifen der Fa. Plasto S. A. -, werden einer vergleichenden UV-Exposition unterzogen. Hierzu werden die mit Trennpapier bzw. Trennfolie eingedeckten und im Falle der tesa® Power-Strips® zusätzlich in einer Papiertasche eingesiegelten Klebestreifen ihrer Originalverpackung entnommen und einer Kaltlicht-UV Bestrahlung ausgesetzt. Ausgewählte, für die Verklebungsleistung relevante Produkteigenschaften werden vergleichend vor und nach UV-Einwirkung ermittelt. Es ergeben sich nachfolgende Eigenschaften:

| **Ver- suchs- Nummer** | **Muster** | **UV-Exposition** | **Schälfe- stigkeit** | **Anfaßkleb- rigkeit** ^{**1**} | **Kippscher- standzeit** | **Spannung bei max. Dehnung** | **Max. Deh- nung** |
|---|---|---|---|---|---|---|---|
| | | | **mm/24h** | | **in Tagen** | **in MPa** | **in %** |
| **I-01** | tesa® Poster-Strips | Ohne | ca. 1 | ++ | n.e. | 10.0 ± 1.5 | 1250 ± 200 |
| **I-02** | "-" | 1 d Suntester | 15 | o | n.e. | 9.1 | 1300 |
| **I-03** | "-" | 4 d Suntester | > 50 | - | n.e. | n.e. | n.e. |
| **I-101** | "-" | 6 Wochen Raumlichtlagerung | 5 | + | n.e. | 10.0 ± 1.5 | 1250 ± 200 |
| **I-04** | tesa® Power-Strips® | Ohne | n.e. | ++ | 25 | 11.0 ± 2 | 1100 ± 200 |
| **I-05** | "-" | 1 d Suntester | n.e. | o | 10 | 10.7 | 1050 |
| **I-06** | "-" | 4 d Suntester | n.e. | - | 2 | 9.0 | 1050 |
| **I-102** | "-" | 6 Wochen Raumlichtlagerung | n.e. | + | 12 | 11.0 ± 2 | 1100 ± 200 |
| **I-07** | Command® Adhesive ² | Ohne | 0 | ++ | n.e. | n.e. | n.e. |
| **I-08** | "-" | 1 d Suntester | 1 | + | n.e. | n.e. | n.e. |
| **I-09** | "-" | 4 d Suntester | > 50 | - | n.e. | n.e. | n.e. |
| **I-07a** | Command® Adhesive ³ | Ohne | 0 | ++ | > 50 ** | 2.8 | 585 ± 25 |
| **I-08a** | "-" | 1 d Suntester | 1 | + | n.e. | 2.8 | 585 ± 25 |
| **I-09a** | "-" | 4 d Suntester | > 50 | - | 0.1 ** | 2.8 | 580 ± 25 |
| **I-103** | "-" | 6 Wochen Raumlichtlagerung | 3 | + | n.e. | 2.8 | 580 ± 25 |
| **I-10** | Formule Force 1000⁴ | Ohne | 1 | + | n.e. | 2.8 | 695 ± 25* |
| **I-11** | "-" | 1 d Suntester | 2 | n.e. | n.e. | 2.8 | 700 ± 25* |
| **I-12** | "-" | 4 d Suntester | > 50 | - | n.e. | 2.6 | 690 ± 25* |
| **n.e. = Wert wurde nicht ermittelt** | | | | | | | |

| | | | | | | | |
|---|---|---|---|---|---|---|---|
| ¹ **++: sehr hoch; +: hoch; o: mittel; -:niedrig; -: sehr niedrig** | | | | | | | |
| ² **Command® Adhesive Poster Strips; Artikelnummer 17025** | | | | | | | |
| ³ **Command® Adhesive Large Hook Replacement Strips; Artikelnummer 17022** | | | | | | | |
| ⁴ **Artikelnummer 716165** | | | | | | | |
| * **Ermittelt an Originalklebestreifen. Diese werden zwischen planparallelen Klemmbacken derart fixiert, daß die zwischen den Klemmbacken eingespannte Klebestreifenlänge 14 mm beträgt** | | | | | | | |
| ** **Klebestreifenbreite: 19 mm** | | | | | | | |

Für die UV-Transmissionen der in den einzelnen Produkten verwendeten Trennpapiere bzw. im Falle der tesa® Power-Strips® eingesetzten Trennpapier-Siegelpapierkombination wurden nachfolgende Werte ermittelt:

| **Musterbezeichnung** | **% Transmission** | **% Transmission** | **% Transmission** | **% Transmission** |
|---|---|---|---|---|
| | **Wellenlängen- bereich: 240 - 280 nm** | **Wellenlängen- bereich: 280 - 320 nm** | **Wellenlängen- bereich: 320 - 360 nm** | **Wellenlängen- bereich: 360 - 420 nm** |
| tesa® Poster-Strips | n.e. | 4.2 | 10.8 | 25.2 |
| tesa® Power-Strips® | n.e. | 4.2 | 10.8 | 25.2 |
| tesa® Power-Strips® inklusive Papiersiegelhülle (unbedruckte Seite) | n.e. | 3.7 | 9.6 | 13.5 |
| Command® Adhesive-"wall side" | 2.0 | 5.7 | 11.4 | 18.4 |
| Command® Adhesive "object side" | 2.2 | 6.7 | 14.0 | 21.3 |
| Formule Force 1000 untere (dicke) Abdeckfolie | 1.6 | 1.9 | 72.7 | 89.5 |
| Formule Force 1000 obere (dünne) Abdeckfolie | 1.4 | 11.1 | 84.0 | 90.4 |

In jedem der betrachteten Fälle ergibt sich nach UV-Exposition eine meßbare Reduzierung ausgewählter, für die Produktleistung wesentlicher Eigenschaften, dies obwohl die eingesetzten Trennpapiere bzw. Trennpapier/Siegelpapierkombination einen erheblichen Anteil der die Klebmasseoberfläche schädigenden UV-Strahlung abschirmen. Hierbei werden keine wesentlichen Differenzen zwischen den unterschiedlichen Abdeckpapieren bzw. Abdeckfolien, welche für die Unter- bzw. Oberseite der Command® Adhesive Klebestreifen resp. der Plastofix® Klebestreifen genutzt werden, beobachtet. In allen Fällen tritt schon nach kurzen Bestrahlungszeiten ein signifikanter Abfall der Schälfestigkeiten, der Anfaßklebrigkeit sowie der Kippscherstandzeiten in Erscheinung. Nach mehrtägiger UV-Exposition sind sämtliche Klebestreifen für die vorgesehene Anwendung nicht oder nur mehr sehr eingeschränkt nutzbar. Die Zug-Dehnungscharakteristik der Klebestreifen wird dagegen für die hier betrachteten Systeme unter den hier gewählten Prüfbedingungen im Rahmen der Meßgenauigkeit nicht oder nur geringfügig beeinflußt.

Weitergehende Untersuchungen zeigen, daß 1 Tag UV-Exposition etwa den gleichen Effekt auf die Kippscherstandzeiten ausübt, wie 15 Tage Raumlichtlagerung. Die beobachteten Effekte einer z. T. signifikanten Reduzierung der Produktleistung nach UV-Exposition im Suntester können somit auf die Verhältnisse in vielen typischen Haushalts- und Büroumgebungen übertragen werden.

### Beispiel 11

Unterschiedliche marktgängige Klebebänder, welche sich durch dehnendes Verstrecken in der Verklebungsebene rückstands- und zerstörungsfrei wiederablösen lassen, - tesa® Power-Strips®, tesa® Poster-Strips, 3M Command® Adhesive Klebestreifen und Plastofix® Formule Force 1000 Klebestreifen der Fa. Plasto -, werden einer vergleichenden UV-Exposition unterzogen. Hierzu werden die Originalverkaufsverpackungen einer Kaltlicht-UV Bestrahlung im Suntester ausgesetzt. Die Bestrahlung wird jeweils so durchgeführt, daß die Verpackungen mit der Frontseite zur Lichtquelle zeigen. Ausgewählte, für die Verklebungsleistung relevante Produkteigenschaften werden vergleichend vor und nach UV-Einwirkung ermittelt. Es ergeben sich nachfolgende Eigenschaften:

| **Versuchs-Nummer** | **Muster** | **UV-Exposition** | **Schälfestigkeit** | **Anfaßklebrigkeit**^{**1**} | **Kippscherstandzeit** | **Spannung bei max. Dehnung** | **Max. Dehnung** |
|---|---|---|---|---|---|---|---|
| | | | in mm/24h | | In Tagen | in MPa | in % |
| **II-01** | tesa® Poster-Strips | Ohne | 1 | ++ | n.e. | 10.0 ± 1.5 | 1250 ± 200 |
| **II-02** | "-" | 1 d Suntester | * | * | * | * | * |
| **II-03** | "-" | 4 d Suntester | * | * | * | * | * |
| **II-04** | tesa® Power-Strips® | Ohne | n. e. | ++ | 25 | 11.0 ± 2 | 1100 ± 200 |
| **II-05** | "-" | 1 d Suntester | * | * | * | * | * |
| **II-06** | "-" | 4 d Suntester | * | * | * | * | * |
| **II-07** | Command® Adhesive** | Ohne | 0 | ++ | > 50 | 2.8 | 585 ± 25 |
| **II-08** | "-" | 1 d Suntester | n.e. | + | 30 | 2.8 | 585 ± 25 |
| **II-09** | "-" | 4 d Suntester | > 50 | - | 0.1 | 2.8 | 580 ± 25 |
| **II-10** | Formule Force 1000 *** | Ohne | 1 | + | n.e. | 2.8 | 695 ± 25 |
| **II-11** | "-" | 1 d Suntester | 2 | n.e. | n.e. | 2.8 | 700 ± 25 |
| **II-12** | "-" | 4 d Suntester | klebfrei | -- | n.e. | 2.6 | 690 ± 25 |
| **n.e. = Wert wurde nicht ermittelt** | | | | | | | |

| | | | | | | | |
|---|---|---|---|---|---|---|---|
| ^{**1**} **++: sehr hoch; +: hoch; o: mittel; -:niedrig; --: sehr niedrig** | | | | | | | |
| *** keine Veränderungen gegenüber nicht UV-exponierter Ware, da in lichtundurchlässiger Packschachtel verpackt.** | | | | | | | |
| **** Command® Adhesive Large Hook Replacement Strips; Artikelnummer 17022** | | | | | | | |
| ***** Artikelnummer 716165** | | | | | | | |

Für die Transmissionen der transparenten Verpackungsmaterialien (Folienblister) im ultravioletten Wellenlängenbereich wurden nachfolgende Werte ermittelt:

| **Musterbezeichnung** | **% Transmission** | **% Transmission** | **% Transmission** | **% Transmission** |
|---|---|---|---|---|
| | **Wellenlängenbereich: 240 - 280 nm** | **Wellenlängenbereich: 280 - 320 nm** | **Wellenlängenbereich: 320 - 360 nm** | **Wellenlängenbereich: 360 - 420 nm** |
| tesa® Poster-Strips | * | * | * | * |
| tesa® Power-Strips® | * | * | * | * |
| Command® Adhesive** | 68.5 | 86.4 | 89.1 | 90.5 |
| Command® Adhesive*** | 2.8 | 51.5 | 79.8 | 89.2 |
| Formule Force 1000**** | 1.6 | 2.2 | 78.0 | 90.0 |

| | | | | |
|---|---|---|---|---|
| * undurchsichtige Pappschachtelverpackung | | | | |
| ** Flow Pack Verpackung der Command® Adhesive Poster Strips; Artikelnummer 17025 | | | | |
| *** Kunststoff Blisterverpackung der Command® Adhesive Large Hook Replacement Strips; Artikelnummer 17022 | | | | |
| **** Kunststoff Blisterverpackung; Artikelnummer 716165 | | | | |

Für sämtliche Produkte, welche eine vollständig oder teilweise transparente Produktverpackung aufweisen ergibt sich eine signifikante Verschlechterung einzelner für die Produktleistung wesentlicher Eigenschaften nach UV-Exposition. Hierbei zeigen sich innerhalb der Meßgenauigkeit keine Unterschiede zu den in Bspl. I erhaltenen Ergebnissen, welche für die den Originalverpackungen entnommenen Klebestreifen erhalten wurden. Die transparenten Verpackungsanteile bewirken in den vorliegenden Fällen somit keine meßbare Erhöhung des UV-Schutzes.

### Beispiel III

tesa® Power-Strips® und tesa® Poster-Strips werden anstelle ihrer Originaltrennpapiere mit silikonisierten Trennpapieren unterschiedlicher Papierqualität eingedeckt und einer UV-Exposition unterzogen. Es ergeben sich nachfolgende Eigenschaften:

| **Versuchs-Nummer** | **Musterbeschreibung** |
|---|---|
| **III-01** | tesa® Poster-Strips abgedeckt mit silikonisiertem Trennpapier KS 900 52B20 gelb (superkalandriertes farbiges Papier; Laufenberg) |
| **III-02** | tesa® Poster-Strips abgedeckt mit silikonisiertem Trennpapier KS 900 52B20 weiß (superkalandriertes Papier; Laufenberg) |
| **III-03** | tesa® Poster-Strips abgedeckt mit silikonisiertem Trennpapier NSA 800 clay coated 52B20 (gestrichenes Papier; Kreidestrich; Laufenberg) |
| **III-04** | tesa® Poster-Strips abgedeckt mit silikonisiertem Trennpapier NSB 500 52B20 (gestrichenes Papier; Laufenberg) |
| **III-05** | tesa® Poster-Strips abgedeckt mit silikonisiertem Trennpapier B 900 wm 52B20 (superkalandriertes Papier, geringer Verdichtet als KS 900; Laufenberg) |

| Versuchs- Nummer | UV-Exposition (Suntester) | Schälfestigkeit | Anfaßkleb-rigkeit ¹ | Spannung bei max. Dehnung | Max. Dehnung |
|---|---|---|---|---|---|
| | **in Tagen** | **in mm/24h** | | **in MPa** | **in %** |
| **III-01a** | ohne | 1 | ++ | 10.0 ± 1.5 | 1250 ± 200 |
| **III-01b** | 1 | 2 | ++ | n.e. | n.e. |
| **III-01c** | 4 | 5 | ++ | n.e. | n.e. |
| **III-02a** | ohne | 1 | ++ | 10.0 ± 1.5 | 1250 ± 200 |
| **III-02b** | 1 | 15 | o | n.e. | n.e. |
| **III-02c** | 4 | > 50 | - | n.e. | n.e. |
| **III-03a** | ohne | 1 | ++ | 10.0 ± 1.5 | 1250 ± 200 |
| **III-03b** | 1 | 15 | ○ | n.e. | n.e. |
| **III-03c** | 4 | 27 | ○ | n.e. | n.e. |
| **III-04a** | ohne | 1 | ++ | 10.0 ± 1.5 | 1250 ± 200 |
| **III-04b** | 1 | 35 | - | n.e. | n.e. |
| **III-04c** | 4 | > 50 | - | n.e. | n.e. |
| **III-05a** | ohne | 1 | ++ | 10.0 ± 1.5 | 1250 ± 200 |
| **III-05b** | 1 | 10 | + | n.e. | n.e. |
| **III-05c** | 4 | 37 | - | n.e. | n.e. |

| | | | | | |
|---|---|---|---|---|---|
| ^{**1**} **++: sehr hoch; +: hoch; o: mittel; -:niedrig; --: sehr niedrig** | | | | | |

Für die Transmissionen der in den einzelnen Mustern verwendeten Trennpapiere im ultravioletten Wellenlängenbereich wurden nachfolgende Werte ermittelt:

| **Musterbezeichnung** | **% Transmission** | **% Transmission** | **% Transmission** | **% Transmission** |
|---|---|---|---|---|
| | **Wellenlängenbereich: 240 - 280 nm** | **Wellenlängenbereich: 280 - 320 nm** | **Wellenlängenbereich: 320 - 360 nm** | **Wellenlängenbereich: 360 - 420 nm** |
| KS 900 52B20 gelb | n.e. | 0.3 | 1.1 | 1.2 |
| KS 900 52B20 weiß | n.e. | 4.2 | 10.8 | 25.2 |
| Trennpapier NSA 800 clay coated 52B20 | n.e. | 2.2 | 6.2 | 17.2 |
| NSB 500 52B20 | n.e. | 17.8 | 29.6 | 34.8 |
| B 900 wm 52B20 | n.e. | 0.7 | 5.3 | 20.0 |

UV-Transmissionen < ca. 2% im Wellenlängenbereich von 280 nm bis 320 nm und von < ca. 5% im Wellenlängenbereich von 320 nm bis 360 nm sowie von < ca. 20%, bevorzugt im Wellenlängenbereich von 360 nm bis 420 nm ergeben eine merkliche Verbesserung der Konstanz von Schälfestigkeit und Anfaßklebrigkeit nach UV-Exposition. Extrem konstante Eigenschaften werden erhalten, wenn die UV-Transmission im gesamten gemessenen Frequenzbereich zwischen 280 nm und 420 nm besonders bevorzugt bei ≤ ca. 1% liegt.

### Beispiel IV

tesa® Power-Strips® und tesa® Poster-Strips werden anstelle ihrer Originaltrennpapiere mit silikonisierten Trennpapieren unterschiedlicher Papierqualität und unterschiedlicher Bedruckung eingedeckt, danach einer UV-Exposition unterzogen. Desgleichen werden einschichtige 800 µm dicke Haftklebestreifen der Rezeptur I bestehend aus 30 Tln. Kraton G RP 6919 (Shell Chemicals), 20 Tln. Septon 2063 (Kuraray), 50 Tln. Regalite R 101 (Hercules), 1 Tl. Kronos 2160 (Kronos-Titan), 0.5 Tle Tinuvin P (Ciba) und 0.3 Tle Irganox 1010 (Ciba) untersucht. Es ergeben sich nachfolgende Eigenschaften:

| **Versuchs-Nummer** | **Musterbeschreibung** |
|---|---|
| **IV-01** | tesa® Poster-Strips abgedeckt mit silikonisiertem Trennpapier KS 900 52B20 weiß (Laufenberg) |
| **IV-02** | tesa® Poster-Strips abgedeckt mit silikonisiertem Trennpapier B 900 wm 52B20 (Laufenberg); TP einseitig in 3 µm Stärke weiß unter dem Silikonstrich bedruckt |
| **IV-03** | tesa® Poster-Strips abgedeckt mit silikonisiertem Trennpapier B 900 wm 52B20 (Laufenberg); TP beidseitig in je 3 µm Stärke weiß unter dem Silikonstrich bedruckt |
| **IV-04** | tesa® Poster-Strips abgedeckt mit silikonisiertem Trennpapier B 900 wm 52B20 (Laufenberg); TP einseitig in 6 µm Stärke weiß unter dem Silikonstrich bedruckt |
| **IV-05** | tesa® Poster-Strips abgedeckt mit silikonisiertem Trennpapier B 900 wm 52B20 (Laufenberg); TP einseitig in 3 µm Stärke schwarz unter dem Silikonstrich bedruckt |
| **IV-06** | tesa® Power-Strips® abgedeckt mit silikonisiertem Trennpapier B 900 wm 52B20 (Laufenberg); TP einseitig in 3 µm Stärke weiß unter dem Silikonstrich bedruckt |
| **IV-07** | tesa® Power-Strips® abgedeckt mit silikonisiertem Trennpapier B 900 wm 52B20 (Laufenberg); TP einseitig in 3 µm Stärke schwarz unter dem Silikonstrich bedruckt |
| **IV-08** | Haftklebestreifen der Rezeptur I abgedeckt mit silikonisiertem Trennpapier KS 900 52B20 weiß (Laufenberg) |
| **IV-09** | Haftklebestreifen der Rezeptur abgedeckt mit silikonisiertem Trennpapier B 900 wm 52B20 (Laufenberg); TP einseitig in 3 µm Stärke schwarz unter dem Silikonstrich bedruckt |

| **Versuchs-Nummer** | **UV-Exposition (Suntester)** | **Schälfestigkeit** | **Anfaßklebrigkeit** ^{**1**} | **Kippscherstandzeit** |
|---|---|---|---|---|
| | **in Tagen** | **in mm/24h** | | **In Tagen** |
| **IV-01a** | 0 | 1 | ++ | n.e. |
| **IV-01b** | 1 | 15 | o | n.e. |
| **IV-01c** | 4 | > 50 | - | n.e. |
| **IV-01d** | 8 | > 50 | klebfrei | n.e. |
| **IV-02a** | 0 | 1 | ++ | n.e. |
| **IV-02b** | 1 | 2.5 | ++ | n.e. |
| **IV-02c** | 4 | 4 | ++ | n.e. |
| **IV-02d** | 8 | 3 | ++ | n.e. |
| **IV-03a** | 0 | 1 | ++ | n.e. |
| **IV-03b** | 1 | 1.5 | ++ | n.e. |
| **IV-03c** | 4 | n.e. | n.e. | n.e. |
| **IV-03d** | 8 | 2.5 | ++ | n.e. |
| **IV-04a** | 0 | 1.5 | ++ | n.e. |
| **IV-04b** | 1 | 1 | ++ | n.e. |
| **IV-04c** | 4 | n.e. | n.e. | n.e. |
| **IV-04d** | 8 | 2 | ++ | n.e. |
| **IV-05a** | 0 | 0.5 | ++ | n.e. |
| **IV-05b** | 1 | 0.5 | ++ | n.e. |
| **IV-05c** | 4 | 1.5 | ++ | n.e. |
| **IV-05d** | 8 | 2 | ++ | n.e. |
| I**V-06a** | 0 | n.e. | ++ | 25 |
| **IV-06b** | 1 | n.e. | ++ | 25 |
| **IV-06c** | 4 | n.e. | ++ | 12 |
| **IV-06d** | 8 | n.e. | + | 5 |
| **IV-07a** | 0 | n.e. | ++ | 25 |
| **IV-07a** | 1 | n.e. | ++ | 25 |
| **IV-07c** | 4 | n.e. | ++ | 23 |
| **IV-07d** | 8 | n.e. | ++ | 20 |
| **IV-08a** | 0 | 8 | o | n.e. |
| **IV-08b** | 1 | 11 | o | n.e. |
| **IV-08c** | 4 | >50 | - | n.e. |
| **IV-08d** | 8 | >50 | - | n.e. |
| **IV-09a** | 0 | 8 | o | n.e. |
| **IV-09b** | 1 | 10 | o | n.e. |
| **IV-09c** | 4 | 10 | o | n.e. |
| **IV-09d** | 8 | 8 | o | n.e. |
| n.e. = Wert wurde nicht ermittelt | | | | |

| | | | | |
|---|---|---|---|---|
| ¹ ++: sehr hoch; +: hoch; o: mittel; -:niedrig; -: sehr niedrig | | | | |

Für die Transmissionen der o. g. Trennpapiere im ultravioletten Wellenlängenbereich wurden nachfolgende Werte ermittelt:

| **Musterbezeichnung** | **% Transmission** | **% Transmission** | **% Transmission** | **% Transmission** |
|---|---|---|---|---|
| | **Wellenlängen- bereich: 240 - 280 nm** | **Wellenlängen- bereich: 280 - 320 nm** | **Wellenlängen- bereich: 320 - 360 nm** | **Wellenlängen- bereich: 360 - 420 nm** |
| KS 900 52B20 weiß | n.e. | 4.2 | 10.8 | 25.2 |
| B 900 wm 52B20; einseitig in 3 µm Stärke weiß bedruckt | n.e. | 0.5 | 1.3 | 8.4 |
| B 900 wm 52B20; beidseitig in je 3 µm Stärke weiß bedruckt | n.e. | 0.2 | 0.2 | 3.7 |
| B 900 wm 52B20; einseitig in 6 µm Stärke weiß bedruckt | n.e. | 0.4 | 0.7 | 4.5 |
| B 900 wm 52B20; einseitig in 3 µm Stärke schwarz bedruckt | n.e. | 0.1 | 0.1 | 0.4 |
| n.e. = Wert wurde nicht ermittelt | | | | |

UV-Transmissionen < ca. 1% im Wellenlängenbereich von 280 nm bis 320 nm und von bevorzugt < ca. 2% im Wellenlängenbereich von 320 nm bis 360 nm sowie von bevorzugt < ca. 10% im Wellenlängenbereich von 360 nm bis 420 nm ergeben einen hervorragenden Erhalt der hier betrachteten für die Produktleistung wesentlichen Leistungsmerkmale Schälfestigkeit und Anfaßklebrigkeit. Extrem konstante Eigenschaften werden erhalten, wenn die UV-Transmission im gesamten gemessenen Frequenzbereich zwischen 280 nm und 420 nm besonders bevorzugt bei ≤ 1 % beträgt.

### Beispiel V

tesa® Power-Strips® und tesa® Poster-Strips werden anstelle ihrer Originaltrennpapiere mit Trennfolien eingedeckt, welche unterschiedliche die UV-Transmission reduzierende Beschichtungen besitzen sowie mit solchen, welche in die Folie integrierte die UV-Transmission reduzierende Additive enthalten. Mit gleichen Trennfolien werden 800 µm dicke Klebestreifen der Rezeptur I (siehe Beispiel IV) eingedeckt und einer UV-Exposition unterzogen. Es ergeben sich nachfolgende Produkteigenschaften:

| **Versuchs- Nummer** | **Musterbeschreibung** |
|---|---|
| **V-01** | tesa® Poster-Strips abgedeckt mit silikonisierter 25 µm dicker BOPP-Folie |
| **V-02** | Klebestreifen der Rezeptur I abgedeckt mit silikonisierter 25 µm dicker BOPP-Folie |
| **V-03** | Klebestreifen der Rezeptur I abgedeckt mit einseitig silikonisierter 23 µm dicker PETP-Folie (Hostaphan RN 25 (Mitsubishi); Silikon: 52B20 (Laufenberg)). |
| **V-04** | Klebestreifen der Rezeptur I abgedeckt mit silikonisierter 23 µm dicker PETP- Folie (Hostaphan RN 25 (Mitsubishi); Silikon: 52B20 (Laufenberg)). Trennfolie rückseitig mit einem kolloidalen Titandioxid (Hombitec RM 300 WP (Sachtleben)) und Tinuvin 1130 (Ciba) enthaltenen Klarlack bedruckt. |
| **V-05** | Klebestreifen der Rezeptur I abgedeckt mit silikonisierter 23 µm dicker PETP- Folie (Hostaphan RN 25 (Mitsubishi); Silikon: 52B20 (Laufenberg)). Trennfolie rückseitig mit einem hochtransparentem Tinuvin 1130 (Ciba) enthaltenen, gelb eingefärbten Klarlack bedruckt. |
| **V-06** | Klebestreifen der Rezeptur I abgedeckt mit silikonisierter Hostaphan D074E GUV (50 µm PETP mit integrierten die UV-Transmission reduzierenden Additiven (Mitsubishi); Silikon: 52B20 (Laufenberg)) |

| **Versuch-Nummer** | **UV-Exposition (Suntester)** | **Schälfestigkeit** | **Anfaßklebrigkeit**^{**1**} |
|---|---|---|---|
| | | **in mm/24h** | |
| **V-01a** | 0 | 1 | ++ |
| **V-01b** | 1 | > 50 | - |
| **V-01c** | 4 | > 50 | - |
| **V-01d** | 8 | > 50 | - |
| **V-02a** | 0 | 8 | o |
| **V-02b** | 1 | > 50 | - |
| **V-02c** | 4 | > 50 | - |
| **V-02d** | 8 | > 50 | - |
| **V-03a** | 0 | 8 | o |
| **V-03b** | 1 | 40 | - |
| **V-03c** | 4 | > 50 | - |
| **V-03d** | 8 | > 50 | - |
| **V-04a** | 0 | 8 | o |
| **V-04b** | 1 | 10 | o |
| **V-04c** | 4 | > 50 | - |
| **V-04d** | 8 | > 50 | - |
| **V-05a** | 0 | 8 | o |
| **V-05b** | 1 | 10 | o |
| **V-05c** | 4 | 10 | o |
| **V-05d** | 8 | 11 | o |
| **V-06a** | 0 | 8 | o |
| **V-06b** | 1 | 9 | o |
| **V-06c** | 4 | 13 | o |
| **V-06d** | 8 | 18 | o |

| | | | |
|---|---|---|---|
| ¹ ++: sehr hoch; +: hoch; o: mittel, -:niedrig; -: sehr niedrig | | | |

Für die Transmissionen der o. g. Trennpapiere im ultravioletten Wellenlängenbereich wurden nachfolgende Werte ermittelt:

| **Musterbezeichnung** | **% Transmission** | **% Transmission** | **% Transmission** | **% Transmission** |
|---|---|---|---|---|
| | **Wellenlängenbereich: 240 - 280 nm** | **Wellenlängenbereich: 280 - 320 nm** | **Wellenlängenbereich: 320 - 360 nm** | **Wellenlängenbereich: 360 - 420 nm** |
| V-01, V-02 | 72,6 | 79,4 | 85,7 | 89,1 |
| V-03 | 2,2 | 8,6 | 81,3 | 85,8 |
| V-04 | 0,8 | 1,6 | 13,7 | 61,0 |
| V-05 | 0,2 | 0,2 | 0,3 | 0,6 |
| V-06 | 0,5 | 0,3 | 0,3 | 50,4 |

Klebestreifen, welche mit silikonisierten, nicht mit einem UV-Schutz ausgerüsteten BOPP-Folien, abgedeckt sind, weisen bereits nach sehr kurzer UV-Exposition eine drastische Reduzierung von Schälfestigkeit und Anfaßklebrigkeit auf (Versuche V-01, V-02). Substitution des BOPPs durch PETP bewirkt lediglich eine leichte Verbesserung im Bereich kurzer Bestrahlungszeiten (Versuch V-03). Erst UV-Durchlässigkeiten von < ca. 2% im Wellenlängenbereich von 240 nm bis 280 nm und von < ca. 2% im Wellenlängenbereich zwischen 280 nm und 320 nm und von < ca. 20% im Wellenlängenbereich von 320 nm bis 360 nm und von < ca. 80% im Wellenlängenbereich von 360 nm bis 420 nm ermöglichen eine deutlich verminderte Reduzierung vorgenannter klebtechnischer Eigenschaften (Bspl. V-04). Sehr konstante Eigenschaften werden erhalten, wenn die UV-Transmission im gesamten Frequenzbereich zwischen 280 nm und 360 nm bei ≤ 1 % liegt (Bsple. V-05 und V-06). Eine weitere Verbesserung wird erhalten, wenn zusätzlich die UV-Transmission im Wellenlängenbereich zwischen 360 nm und 420 nm sehr niedrige Werte aufweist (Bspl. V-06).

### Beispiel VI

800 µm dicke, 20 mm x 50 mm (Breite x Länge) messende Klebestreifen der Rezeptur I (siehe Bspl. IV) werden beidseitig mit gleichfalls 20 mm x 50 mm abmessenden wasserklar transparenten silikonisierten Trennfolien auf Basis eines aromatischen Polyesters, welche zusätzlich die UV-Transmission reduzierende Additive enthalten (Hostaphan D074E GUV; Mitsubishi), vollflächig eingedeckt. Desgleichen werden Klebestreifen vorgenannter Abmessungen derart beidseitig mit trennlackiertem Hostaphan D074E GUV eingedeckt, daß die Trennfolien die Klebestreifen beidseitig deckungsgleich sowohl in ihrer Länge als auch in ihrer Breite um ca. 10 mm überragen. Im Bereich des Überstandes werden die obere und untere Trennfolie nun derart mit 12 mm breitem tesa Multi-Film umklebt, daß die Trennfolien einander geschlossen berühren. Vergleichend untersucht wird das Zug-Dehnungsverhalten der Klebestreifen nach UV-Exposition. Im Test sind die Klebestreifen durch das vorhandene Streulicht im Kantenbereich direkt der UV-Strahlung ausgesetzt. Es ergeben sich nachfolgende Eigenschaften:

| **Versuchs-Nummer** | **Musterbeschreibung** | **UV-Exposition (Suntester)** | **Spannung bei max. Dehnung*** | **Max. Dehnung*** |
|---|---|---|---|---|
| | | **In Tagen** | **in MPa** | **in %** |
| **VI-1** | Klebestreifen Rezeptur 1, beidseitig dekkungsgleich mit D074E GUV eingedeckt | ohne | 8.9 | 795 |
| **VI-2** | Klebestreifen Rezeptur 1, beidseitig dekkungsgleich mit D074E GUV eingedeckt | 8 | 3.4 | 820 |
| **VI-3** | Klebestreifen Rezeptur 1, beidseitig mit überstehender und umklebter D074E GUV eingedeckt | 8 | 8.7 | 800 |

| | | | | |
|---|---|---|---|---|
| * ermittelt an 20 mm x 50 mm messenden Klebestreifen | | | | |

Für den Fall intensiver UV-Bestrahlung im Kantenbereich der Klebestreifen bieten Verpackungen, welche auch den Rand der Klebestreifen gegen UV-Exposition abdecken einen bevorzugten UV-Schutz. Entsprechend verpackte Klebestreifen weisen in vorliegendem Fall nahezu keine Reduktion der Spannung bei maximaler Dehnung auf, eine wesentliche Voraussetzung für ein reißerfreies Wiederablösen der Klebestreifen.

### Beispiel VII

tesa Poster-Strips werden mit unterschiedlichen Trennpapieren eingedeckt und in Pappschachteln der Abmessungen 80 mm x 106 mm x 14 mm (Breite x Höhe x Dicke), welche ein 40 mm x 50 mm (Breite x Höhe) großes Sichtfenster unterschiedlicher UV-Durchlässigkeit enthalten einer UV-Exposition unterzogen. Es ergeben sich nachfolgende Eigenschaften:

| **Versuchs-Nummer** | **Musterbeschreibung Trennpapiere** | **Musterbeschreibung** |
|---|---|---|
| **VII-1** | tesa® Poster-Strips abgedeckt mit silikonisiertem Trennpapier KS 900 52B20 weiß (Laufenberg) | geschlossene Pappschachtel, kein Sichtfenster |
| **VII-2** | tesa® Poster-Strips abgedeckt mit silikonisiertem Trennpapier B 900 wm 52B20 (Laufenberg); TP beidseitig in je 3 µm Stärke weiß unter dem Silikonstrich bedruckt | geschlossene Pappschachtel, kein Sichtfenster |
| **VII-3** | tesa® Poster-Strips abgedeckt mit silikonisiertem Trennpapier KS 900 52B20 weiß (Laufenberg) | Pappschachtel mit Sichtfenster aus PETP-Folie Hostaphan RN 25 (Mitsubishi) |
| **VII-4** | tesa® Poster-Strips abgedeckt mit silikonisiertem Trennpapier B 900 wm 52B20 (Laufenberg); TP beidseitig in je 3 µm Stärke weiß unter dem Silikonstrich bedruckt | Pappschachtel mit Sichtfenster aus PETP-Folie Hostaphan RN 25 (Mitsubishi) |
| **VII-5** | tesa® Poster-Strips abgedeckt mit silikonisiertem Trennpapier KS 900 52B20 weiß (Laufenberg) | Pappschachtel mit Sichtfenster aus Hostaphan D074E GUV (50 µm PETP mit integrierten die UV-Transmission reduzierenden Additiven (Mitsubishi)) |
| **VII-6** | tesa® Poster-Strips abgedeckt mit silikonisiertem Trennpapier B 900 wm 52B20 (Laufenberg); TP beidseitig in je 3 µm Stärke weiß unter dem Silikonstrich bedruckt | Pappschachtel mit Sichtfenster aus Hostaphan D074E GUV (50 µm PETP mit integrierten die UV-Transmission reduzierenden Additiven (Mitsubishi)) |

| **Versuchs-Nummer** | **UV-Exposition (Suntester)** | **Schälfestigkeit** | **Anfaßklebrigkeit**^{**1**} | **Schädigungen im Randbereich der Klebestreifen** |
|---|---|---|---|---|
| | **In Tagen** | **in mm/24h** | | |
| **VII-1a** | 0 | 1 | ++ | keine |
| **VII-1b** | 1 | 1 | ++ | keine |
| **VII-1c** | 4 | 1 | ++ | keine |
| **VII-2a** | 0 | 1 | ++ | keine |
| **VII-2b** | 1 | 1 | ++ | keine |
| **VII-2c** | 4 | 1 | ++ | keine |
| **VII-3a** | 0 | 1 | ++ | keine |
| **VII-3b** | 1 | 6 | + | keine |
| **VII-3c** | 4 | > 50 | - | feinste Risse |
| **VII-4a** | 0 | 1 | ++ | keine |
| **VII-4b** | 1 | 1 | ++ | keine |
| **VII-4c** | 4 | 4 | ++ | keine |
| **VII-5a** | 0 | 1 | ++ | keine |
| **VII-5b** | 1 | 2 | ++ | keine |
| **VII-5c** | 4 | 15 | ○ | feinste Risse |
| **VII-6a** | 0 | 1 | ++ | keine |
| **VII-6b** | 1 | 1 | ++ | keine |
| **VII-6c** | 4 | 4 | ++ | keine |

Für die Transmission der o. g. Sichtfensterfolien im ultravioletten Wellenlängenbereich wurden nachfolgende Werte ermittelt:

| **Musterbezeichnung** | **% Transmission** | **% Transmission** | **% Transmission** | **% Transmission** |
|---|---|---|---|---|
| | **Wellenlängenbereich: 240 - 280 nm** | **Wellenlängenbereich: 280 - 320 nm** | **Wellenlängenbereich: 320 - 360 nm** | **Wellenlängenbereich: 360 - 420 nm** |
| VII-1, VII-2 | * | * | * | * |
| VII-3, VII-4 | 2,2 | 8,0 | 80,2 | 84,3 |
| VII-5, VII-6 | 0,3 | 0,3 | 0,3 | 50,4 |

| | | | | |
|---|---|---|---|---|
| * geschlossene Pappschachtelverpackung | | | | |

Die Verwendung einer weitestgehend UV-impermeablen Sichtfensterfolie verbessert die Konstanz von Schälfestigkeit und Anfaßklebrigkeit nach UV-Exposition deutlich (Versuch VII-3 im Vgl. zu Versuch VII-5). Insbesondere jedoch bewirkt ein weitestgehend UV-undurchlässiges Sichtfenster jedoch eine Reduzierung der Schädigung im Randbereich der Klebestreifen, welche sich im Falle sehr hoher UV-Expositionen in Form von feinsten Einrissen in den Kantenbereichen äußert (sichtbar bei Dehnung der Klebestreifen). Entsprechende Einrisse können beim Ablösen der Klebestreifen durch dehnendes Verstrecken zum vorzeitigen Reißen derselben führen.

## Patentansprüche

1. Klebfolien-Verpackungseinheit aus einer Klebfolie und einer Verpackung aus flächigen Abdeckmaterialien für die zu verklebenden Bereiche der Haftklebemassen und/oder einer Umverpackung für die Klebfolie und/oder aus einer Einzelverpackung mit transparenten Verpackungselementen, wobei
a) die Klebfolie durch dehnbares Verstrecken in Richtung ihrer Verklebungsbene rückstands- und zerstörungsfrei wiederlösbar ist und
b) einseitig oder beidseitig eine Haftklebemasse auf Basis eines Elastomer-Harz-Gemisches aufweist
**dadurch gekennzeichnet, daß**
c) die Verpackung derart UV-undurchlässig ist, dass
ihre Transmission für elektromagnetische Strahlung
im Wellenlängenbereich 240 - 280 nm unter 2 %,
im Wellenlängenbereich 280 - 320 nm unter 2 %,
im Wellenlängenbereich 320 - 360 nm unter 5 % und
im Wellenlängenbereich 360 - 420 nm unter 80 % beträgt.

2. Klebfolien-Verpackungseinheit nach Anspruch 1, **dadurch gekennzeichnet, dass** die Verpackung derartig UV-undurchlässig ist, dass ihre Transmission für elektromagnetische Strahlung im Wellenlängenbereich 240 - 280 nm unter 1 % beträgt, im Wellenlängenbereich 280 - 320 nm unter 1 % beträgt, im Wellenlängenbereich 320 - 360 nm unter 2 % beträgt und im Wellenlängenbereich 360 - 420 nm unter 20 %, speziell unter 2 % beträgt.

3. Klebfolien-Verpackungseinheit nach Anspruch 1 oder 2, **dadurch gekennzeichnet, dass** die flächigen Abdeckmaterialien und/oder die Umverpackung und/oder die Einzelverpackung teilweise oder vollständig transparent sind.

4. Klebfolien-Verpackungseinheit nach Anspruch 3, **dadurch gekennzeichnet, dass** die transparenten flächigen Abdeckmaterialien und/oder die Umverpackung und/oder die Einzelverpackung teilweise oder vollständig farbig ausgestaltet sind.

5. Klebfolien-Verpackungseinheit nach einem der Ansprüche 1 bis 4, **dadurch gekennzeichnet, dass** die flächigen Abdeckmaterialien im Kontaktbereich zur Haftklebemasse abhäsiv eingestellt sind und insbesondere aus einem Trennpapier oder einer Trennfolie bestehen.

6. Klebfolien-Verpackungseinheit nach Anspruch 5, **dadurch gekennzeichnet, dass** die flächigen Abdeckmaterialien im Kontaktbereich zur Haftklebemasse ein silikonhaltiges Trennmittel enthalten.

7. Klebfolien-Verpackungseinheit nach einem der Ansprüche 1 bis 6, **dadurch gekennzeichnet, dass** die Umverpackung aus einer Siegelfolie, einem Siegelpapier oder einer Metallfolie besteht.

8. Klebfolien-Verpackungseinheit nach einem der Ansprüche 1 bis 7, **dadurch gekennzeichnet, dass** die Einzelverpackung teilweise oder vollständig aus einer transparenten Verpackungsfolie besteht.

9. Klebfolien-Verpackungseinheit nach einem der Ansprüche 1 bis 8, **dadurch gekennzeichnet, dass** die Klebfolien beidseitig Haftklebemassen aufweisen.

10. Klebfolien-Verpackungseinheit nach einem der Ansprüche 1 bis 9, **dadurch gekennzeichnet, dass** die Haftklebemasse als Elastomer Naturkautschuk oder Synthesekautschuk enthält, insbesondere Styrolblockcopolymere.

## Claims

1. An adhesive sheet/pack unit comprising an adhesive sheet and a pack made of flat liner materials for the regions of the pressure-sensitive adhesives that are to be bonded and/or comprising a packaging enclosure for the adhesive sheet and/or comprising an individual pack with transparent packaging elements, where
a) the adhesive sheet is redetachable without residue or destruction by extensive stretching in the direction of its bond plane and
b) has on one or both sides a pressure-sensitive adhesive composition based on an elastomer/resin mixture,
**characterized in that**
c) the pack is UV-impermeable such that its transmission for electromagnetic radiation
in the wavelength range 240 - 280 nm is below 2%;
in the wavelength range 280 - 320 nm is below 2%;
in the wavelength range 320 - 360 nm is below 5%; and
in the wavelength range 360 - 420 nm is below 80%.

2. The adhesive sheet/pack unit as claimed in claim 1, which is UV-impermeable such that its transmission for electromagnetic radiation in the wavelength range 240-280 nm is below 1%; in the wavelength range 280-320 nm is below 1%; in the wavelength range 320-360 nm is below 2% and in the wavelength range 360-420 nm is below 20%, especially below 2%.

3. The adhesive sheet/pack unit as claimed in claim 1 or 2, wherein the sheetlike liner materials and/or the outer packaging and/or the individual pack are partly or fully transparent.

4. The adhesive sheet/pack unit as claimed in claim 3, wherein the transparent sheetlike liner materials and/or the outer packaging and/or the individual pack are partly or fully colored.

5. The adhesive sheet/pack unit as claimed in one of claims 1 to 4, wherein the sheetlike liner materials have been formulated to be abhesive in the contact region with the pressure-sensitive adhesive composition and comprise, in particular, a release paper or a release film.

6. The adhesive sheet/pack unit as claimed in claim 5, wherein the sheetlike liner materials in the contact region with the pressure-sensitive adhesive composition comprise a silicone release agent.

7. The adhesive sheet/pack unit as claimed in one of claims 1 to 6, wherein the outer packaging comprises a sealing film, a sealing paper, or a metal foil.

8. The adhesive sheet/pack unit as claimed in one of claims 1 to 7, wherein the individual pack consists of or comprises a transparent packaging film.

9. The adhesive sheet/pack unit as claimed in one of claims 1 to 8, wherein the adhesive sheets have pressure-sensitive adhesive composition on both sides.

10. The adhesive sheet/pack unit as claimed in one of claims 1 to 9, wherein the pressure-sensitive adhesive composition comprises natural rubber or synthetic rubber as elastomer, especially styrene block copolymers.

## Revendications

1. Unité d'emballage pour films adhésifs constituée d'un film adhésif et d'un emballage dans des matières de recouvrement planes pour les zones à coller des masses autoadhésives et/ou d'un emballage groupé pour le film adhésif et/ou d'un emballage individuel comportant des éléments d'emballage transparents,
a) le film adhésif étant redécollable, sans résidus ni endommagement, par étirage élastique dans le sens de son plan de collage et
b) présentant sur un côté ou sur ses deux côtés une masse autoadhésive à base d'un mélange de résine et d'élastomère, **caractérisée en ce que**
c) l'emballage ne laisse pas passer les UV, de telle sorte que sa transmission pour un rayonnement électromagnétique dans un domaine de longueurs d'ondes de 240 à 280 nm soit inférieure à 2%, dans un domaine de longueurs d'ondes de 280 à 320 nm inférieure à 2%, dans un domaine de longueurs d'ondes de 320 à 360 nm inférieure à 5% et dans un domaine de longueurs d'ondes de 360 à 420 nm inférieure à 80%.

2. Unité d'emballage pour films adhésifs selon la revendication 1, **caractérisée en ce que** l'emballage ne laisse pas passer les UV, de telle sorte que sa transmission pour un rayonnement électromagnétique dans un domaine de longueurs d'ondes de 240 à 280 nm soit inférieure à 1%, dans un domaine de longueurs d'ondes de 280 à 320 nm inférieure à 1%, dans un domaine de longueurs d'ondes de 320 à 360 nm inférieure à 2% et dans un domaine de longueurs d'ondes de 360 à 420 nm inférieure à 20%, en particulier inférieure à 2%.

3. Unité d'emballage pour films adhésifs selon la revendication 1 ou 2, **caractérisée en ce que** les matières de recouvrement planes et/ou l'emballage groupé et/ou l'emballage individuel sont partiellement ou entièrement transparents.

4. Unité d'emballage pour films adhésifs selon la revendication 3, **caractérisée en ce que** les matières de recouvrement planes transparentes et/ou l'emballage groupé et/ou l'emballage individuel sont partiellement ou entièrement colorés.

5. Unité d'emballage pour films adhésifs selon l'une quelconque des revendications 1 à 4, **caractérisée en ce que** les matières de recouvrement planes sont antiadhésives dans la zone de contact avec la masse autoadhésive et sont constituées en particulier d'un papier de séparation ou d'un film de séparation.

6. Unité d'emballage pour films adhésifs selon la revendication 5, **caractérisée en ce que** les matières de recouvrement planes renferment un agent de séparation contenant de la silicone dans la zone de contact avec la masse autoadhésive.

7. Unité d'emballage pour films adhésifs selon l'une quelconque des revendications 1 à 6, **caractérisée en ce que** l'emballage groupé est constitué d'un film de scellement, d'un papier de scellement ou d'un film métallique.

8. Unité d'emballage pour films adhésifs selon l'une quelconque des revendications 1 à 7, **caractérisée en ce que** l'emballage individuel est constitué partiellement ou entièrement d'un film d'emballage transparent.

9. Unité d'emballage pour films adhésifs selon l'une quelconque des revendications 1 à 8, **caractérisée en ce que** les films adhésifs présentent des masses autoadhésives sur leurs deux côtés.

10. Unité d'emballage pour films adhésifs selon l'une quelconque des revendications 1 à 9, **caractérisée en ce que** la masse autoadhésive renferme comme élastomère du caoutchouc naturel ou du caoutchouc de synthèse, en particulier un copolymère en blocs de styrène.
